# EUROPEAN PATENT APPLICATION

(11) **EP 3 316 114 A1**
(43) Date of publication of application: **02.05.2018**
(21) Application number: 16813508.5
(22) Date of filing: 18.02.2016
(51) Int. Cl.: G06F 3/06

(54) **DATA READING AND WRITING METHOD AND DEVICE**

(30) Priority: 25.06.2015 CN 201510358058
(71) Applicant: ZTE Corporation, Shenzhen, Guangdong 518057 (CN)
(72) Inventor: GUO, Bin, Shenzhen Guangdong 518057 (CN); HAN, Yinjun, Shenzhen Guangdong 518057 (CN); CHENG, Ning, Shenzhen Guangdong 518057 (CN); GAO, Hong, Shenzhen Guangdong 518057 (CN); HUANG, Zhenjiang, Shenzhen Guangdong 518057 (CN); CHEN, Zhenghua, Shenzhen Guangdong 518057 (CN); CHEN, Dianqiang, Shenzhen Guangdong 518057 (CN)
(74) Representative: Regimbeau
(86) International application number: PCT/CN2016/074034
(87) International publication number: WO 2016/206392

(57) **Abstract**

Disclosed are a data reading and writing method and device. The method includes: (S102) receiving a read-write request transmitted by a service application for requesting reading-writing data stored in a virtual storage volume, where the service application is connected to the virtual storage volume through at least two paths, the virtual storage volume is a logical storage volume created on distributed blocks, the paths are paths through which the service application is connected to the virtual storage volume via gateways; and (S104) performing reading-writing on the data stored in the virtual storage volume according to the read-write request through the at least two paths. The solution solves a problem in the related art that when a single gateway fails, data in a storage volume to which the gateway is connected cannot be read/written, thereby achieving an effect that when the single gateway fails, data in the storage volume to which the gateway is connected can be read, and thus an uninterrupted service is ensured.

## Description

### TECHNICAL FIELD

The present invention relates to the communication field, and, in particular, relates to a data reading and writing method and device.

### BACKGROUND

Cloud storage is a field of cloud computing scope, and is an ability to provide massive data storage services and high-speed read and write access, with a distributed technology framework. Cloud storage is a service that is a collection composed of many storage devices and servers. For users, the usage of cloud storage is using a data access service brought by the entire cloud storage system instead of using a specific physical storage device.

Distributed block storage is a kind of cloud storage, and typically is composed of a large number of storage servers and storage devices, which collaborate through software. Divided in accordance with the functions, the distributed block storage has storage modules, collaboration modules, client modules. In addition, the distributed block storage provides external services in the form of block device interfaces. The common block device interface is a standard Internet Small Computer System Interface (iSCSI) interface or a Fiber Channel (FC) interface. Network element that provides the block device interface service is referred to as a gateway herein. The gateway externally exposes the storage capacity of the entire distributed cluster as a standard iSCSI or FC block device service by calling client modules of the distributed block storage, and then the service application may use the block device service through the iSCSI or FC interface.

Achieving end-to-end high availability of the service application and block storage services is a technical challenge. In the related art, Multipath Input / Output (MPIO) is usually used to solve the problem. That is, there are multiple links between the service application and the gateway. The multiple links may carry the Input / Output (I/O) request of the service application using a load sharing or active/ standby manner. When a single path fails, the loads on the failed link can be transferred to other links within a limited period of time to continue providing services for upper layers. However, in the related art, a storage volume usually corresponds to only one gateway, so the failure of the gateway itself cannot be well solved. When the gateway fails, multiple links fail at the same time, and services of the service application will be interrupted.

With respect to the problem in the related art that when a single gateway fails, data in a storage volume to which the gateway is connected cannot be read/written, no effective solution has been proposed so far.

### SUMMARY

The present invention provides a data reading and writing method and device, for solving at least a problem in the related art that when a single gateway fails, data in a storage volume to which the gateway is connected cannot be read/written.

According to an aspect of the present invention, a data reading and writing method is provided. The method includes: receiving a read-write request transmitted by a service application for requesting reading-writing data stored in a virtual storage volume, wherein the service application is connected to the virtual storage volume through at least two paths, the virtual storage volume is a logical storage volume created on distributed blocks, the paths are paths through which the service application is connected to the virtual storage volume via gateways; and performing reading-writing on the data stored in the virtual storage volume according to the read-write request through the at least two paths.

Optionally, the performing reading-writing on the data stored in the virtual storage volume according to the read-write request through the at least two paths includes: transmitting, through the gateways on the at least two paths, a read-write instruction for reading-writing the data stored in the virtual storage volume to clients connected to the gateways; and performing reading-writing on the data stored in the virtual storage volume through the clients.

Optionally, the performing reading-writing on the data stored in the virtual storage volume through the clients includes: when more than two clients simultaneously perform reading-writing on the data stored in the virtual storage volume, performing a concurrent mutual exclusion control on the more than two clients, wherein the concurrent mutual exclusion control allows only one client to perform reading-writing on the data stored in the virtual storage volume; and performing reading-writing on the data stored in the virtual storage volume according to a result of the concurrent mutual exclusion control.

Optionally, the at least two paths comprise a first path and one or more second paths, and the performing reading-writing on the data stored in the virtual storage volume according to the read-write request through the at least two paths includes: determining whether a first gateway on the first path used by the service application is failed; if a determination result is yes, transferring all loads in the first gateway to a second gateway on one of the one or more second paths of the service application; and performing reading-writing on the data stored in the virtual storage volume through the one of the one or more second paths.

Optionally, after the performing reading-writing on the data stored in the virtual storage volume through the one of the one or more second paths, the method further includes: determining that the first gateway returns to normal; transferring a part of the all loads which has been transferred to the second gateway to the first gateway, and performing reading-writing on the data stored in the virtual storage volume with the first path and the one of the one or more second paths; or transferring the all loads which have been transferred to the second gateway to the first gateway, and performing reading-writing on the data stored in the virtual storage volume with the first path.

Optionally, before the receiving a read-write request transmitted by a service application for requesting reading-writing data stored in a virtual storage volume, the method further includes: decomposing a storage space of the virtual storage volume into one or more storage sub-spaces; and distributing the one or more storage sub-spaces to one or more storage devices.

According to another aspect of the present invention, a data reading and writing device is provided. The device includes: a receiving module, configured to receive a read-write request transmitted by a service application for requesting reading-writing data stored in a virtual storage volume, wherein the service application is connected to the virtual storage volume through at least two paths, the virtual storage volume is a logical storage volume created on distributed blocks, the paths are paths through which the service application is connected to the virtual storage volume via gateways; and a process module, configured to perform reading-writing on the data stored in the virtual storage volume according to the read-write request through the at least two paths.

Optionally, the process module includes: a transmission unit, configured to transmit, through the gateways on the at least two paths, a read-write instruction for reading-writing the data stored in the virtual storage volume to clients connected to the gateways; and a first process unit, configured to perform reading-writing on the data stored in the virtual storage volume through the clients.

Optionally, the first process unit includes: when more than two clients simultaneously perform reading-writing on the data stored in the virtual storage volume, performing a concurrent mutual exclusion control on the more than two clients, wherein the concurrent mutual exclusion control allows only one client to perform reading-writing on the data stored in the virtual storage volume; and performing reading-writing on the data stored in the virtual storage volume according to a result of the concurrent mutual exclusion control.

Optionally, the at least two paths comprise a first path and one or more second paths, and the process module includes: a judgment unit, configured to determine whether a first gateway on the first path used by the service application is failed; a transfer unit, configured to, if a determination result is yes, transfer all loads in the first gateway to a second gateway on one of the one or more second paths of the service application; and a second process unit, configured to perform reading-writing on the data stored in the virtual storage volume through the one of the one or more second paths.

Optionally, the device further includes: a determination unit, configured to determine that the first gateway returns to normal; a third process unit, configured to transfer a part of the all loads which has been transferred to the second gateway to the first gateway, and perform reading-writing on the data stored in the virtual storage volume with the first path and the one of the one or more second paths; or a fourth process unit, configured to transfer the all loads which have been transferred to the second gateway to the first gateway, and perform reading-writing on the data stored in the virtual storage volume with the first path.

Optionally, the device further includes: a decomposition module, configured to decompose a storage space of the virtual storage volume into one or more storage sub-spaces; and a distribution module, configured to distribute the one or more storage sub-spaces to one or more storage devices.

Through the present invention, a read-write request transmitted by a service application for requesting reading-writing data stored in a virtual storage volume is received, wherein the service application is connected to the virtual storage volume through at least two paths, the virtual storage volume is a logical storage volume created on distributed blocks, the paths are paths through which the service application is connected to the virtual storage volume via gateways; and the data stored in the virtual storage volume is read/written according to the read-write request through the at least two paths. The problem in the related art that when a single gateway fails, data in a storage volume to which the gateway is connected cannot be read/written is solved, an effect that when the single gateway fails, data in the storage volume to which the gateway is connected can be read is further achieved, and an uninterrupted service is ensured.

### BRIEF DESCRIPTION OF DRAWINGS

The accompanying drawings described herein are used for providing a further understanding of the present invention and constitute a part of the present application. The schematic embodiments and their descriptions of the present invention are used for explaining the present invention, and do not constitute improper limitations to the present invention. In the drawings:
FIG. 1 is a flowchart of a data reading and writing method according to an embodiment of the present invention;
FIG. 2 is a structural block diagram of a data reading and writing device according to an embodiment of the present invention;
FIG. 3 is a first structural block diagram of a process module 24 in the data reading and writing device according to an embodiment of the present invention;
FIG. 4 is a second structural block diagram of a process module 24 in the data reading and writing device according to an embodiment of the present invention;
FIG. 5 is a preferred structural block diagram of a process module 24 in the data reading and writing device according to an embodiment of the present invention;
FIG. 6 is a preferred structural block diagram of a data reading and writing device according to an embodiment of the present invention;
FIG. 7 is a system structure diagram of a distributed block storage and service application according to an embodiment of the present invention;
FIG. 8 is a schematic diagram showing connections between a virtual storage volume and multi paths according to an embodiment of the present invention;
FIG. 9 is a flowchart of providing a distributed block storage for a service application after the distributed block storage is encapsulated according to an embodiment of the present invention; and
FIG. 10 is a flowchart of a handover controller in processing gateway failure and recovery according to an embodiment of the present invention.

### DETAILED DESCRIPTION

Hereinafter, the present invention will be described in detail with reference to the accompanying drawings and embodiments. It should be noted that, in the case of no conflict, the embodiments in the present application and features in the embodiments may be combined with each other.

It should be noted that the terms "first", "second" and the like in the specification and claims of the present invention as well as the above accompanying drawings are used for distinguishing similar objects and are not used for describing a specific sequence or a sequential order.

In an alternative embodiment, with respect to the problem in the related art that when a single gateway fails, data in a storage volume to which the gateway is connected cannot be read/written, a proposed solution is that each storage volume is backed up to another storage volume in real time or quasi real-time, and the another gateway is used to provide service, thereby achieving the high availability of the gateway. The usage of this method requires arranging two storage volumes at the bottom level.

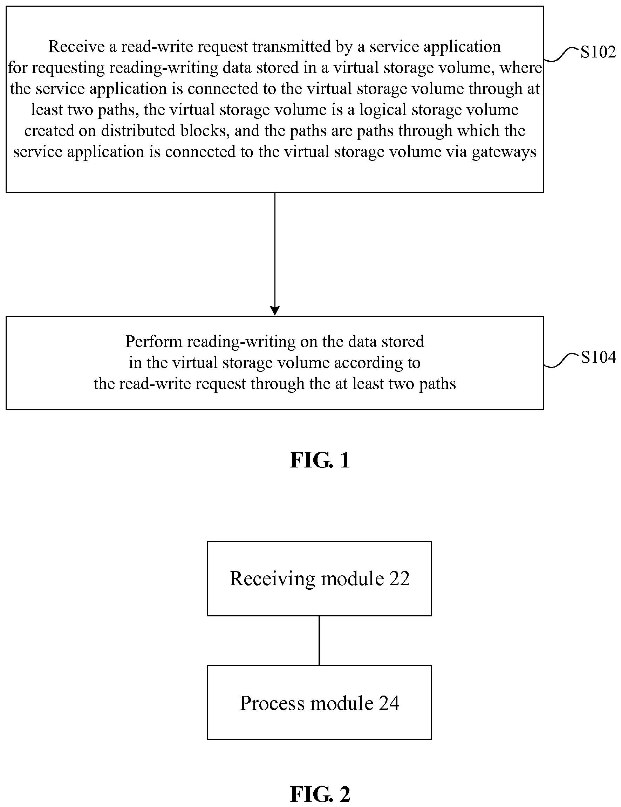

In this embodiment, a data reading and writing method is further provided. FIG. 1 is a flowchart of a data reading and writing method according to an embodiment of the present invention. As shown in FIG. 1, this flowchart includes the following steps.

In step S102, a read-write request transmitted by a service application for requesting reading-writing data stored in a virtual storage volume is received. The service application is connected to the virtual storage volume through at least two paths, the virtual storage volume is a logical storage volume created on distributed blocks, and the paths are paths through which the service application is connected to the virtual storage volume via gateways.

In step S104, the data stored in the virtual storage volume is read/written according to the read-write request through the at least two paths.

Through the above steps, the service application is connected to the virtual storage volume through at least two paths. That is, the service application may be connected to a same virtual storage volume through different gateways, such that when one of the gateways fails, the gateway on other paths may be utilized for reading/writing the virtual storage volume. Moreover, the virtual storage volume is a logic storage volume created on distributed blocks. Logically, the virtual storage volume is a section of contiguous storage space. Thus, The problem in the related art that when a single gateway fails, data in the storage volume to which the gateway is connected cannot be read/written is solved, and thus an effect that when the single gateway fails, data in the storage volume to which the gateway is connected can be read is further achieved, and an uninterrupted service is ensured.

In an alternative embodiment, the performing reading-writing on the data stored in the virtual storage volume according to the read-write request through the at least two paths includes: transmitting, through the gateways on the at least two paths, a read-write instruction for reading-writing the data stored in the virtual storage volume to clients connected to the gateways; and performing reading-writing on the data stored in the virtual storage volume through the clients. The read-write request transmitted by the gateway to the client may be a Small Computer System Interface (SCSI) instruction. After being converted by the client, the instruction can correspond to reading/writing to a data slice in the virtual storage volume.

In an alternative embodiment, the performing reading-writing on the data stored in the virtual storage volume through the clients includes: when more than two clients perform reading-writing on the data stored in the virtual storage volume at the same time, performing a concurrent mutual exclusion control on the more than two clients, wherein the concurrent mutual exclusion control allows only one client to perform reading-writing on the data stored in the virtual storage volume; and performing reading-writing on the data stored in the virtual storage volume according to a result of the concurrent mutual exclusion control. The purpose of adopting the above concurrent mutual exclusion control is to avoid the problem that the updating to the data is lost and the service is disordered.

In an alternative embodiment, the at least two paths include a first path and one or more second paths. The performing reading-writing on the data stored in the virtual storage volume according to the read-write request through the at least two paths includes: determining whether a first gateway on the first path used by the service application is failed; if a determination result is yes, transferring all loads in the first gateway to a second gateway on one of the one or more second paths of the service application; and performing reading-writing on the data stored in the virtual storage volume through the one of the one or more second paths. It can be determined from the foregoing embodiments that each service application may be connected to the virtual storage volume through multiple paths. When performing data reading and writing, the service application may use only the gateway on one path for reading and writing data. Here, the gateway used by the service application may be referred to as a first gateway. After the first gateway is faulty, it needs to use other gateways for service processing, the loads of the first gateway may be transferred to gateways of other paths of the service application, and one of other paths may be selected for serving as a path for replacing the first path service. The selected path may be referred to as a second path, and the gateway of the second path is referred to as a second gateway. Since the gateways connected to the service application are all able to access the virtual storage volume, the service processing using other gateways and the service processing using the first gateway are the same in external presentation, and no service interruption is caused.

In an alternative embodiment, after the performing reading-writing on the data stored in the virtual storage volume through the one of the one or more second paths, the method further includes: determining that the first gateway returns to normal; transferring a part of the all loads which has been transferred to the second gateway to the first gateway, and performing reading-writing on the data stored in the virtual storage volume with the first path and the one of the one or more second paths; or transferring the all loads which have been transferred to the second gateway to the first gateway, and performing reading-writing on the data stored in the virtual storage volume with the first path.

In an alternative embodiment, before the receiving a read-write request transmitted by a service application for requesting reading-writing data stored in a virtual storage volume, the method further includes: decomposing a storage space of the virtual storage volume into one or more storage sub-spaces; and distributing the one or more storage sub-spaces to one or more storage devices. The storage device may be a physical storage module.

Through the above description of the embodiments, those skilled in the art can clearly understand that the method according to the above embodiments may be implemented by software plus a necessary universal hardware platform, and certainly may also be implemented by hardware. However, in many cases, the former is the better implementation. Based on this understanding, the technical solutions of the present invention essentially, or the part contributing to the prior art, may be embodied in the form of a software product. The software product is stored on a storage medium (such as a ROM / RAM, a magnetic disk, Optical disk), includes several instructions for enabling a terminal device (such as a mobile phone, a computer, a server, or a network device, etc.) to execute the method according to each embodiment of the present invention.

In this embodiment, a data reading and writing device is further provided. The device is used for realizing the above embodiments and preferred implementations which have been described and are not repeated. As used below, the term "module" may be a combination of software and/or hardware that implements a predetermined function. Although the devices described in the following embodiments are preferably implemented in software, the implementation of hardware or a combination of software and hardware is also possible and constructed.

FIG. 2 is a structural block diagram of a data reading and writing device according to an embodiment of the present invention. As shown in FIG. 2, the device includes a receiving module 22 and a process module 24. The device is described below.

The receiving module 22 is configured to receive a read-write request transmitted by a service application for requesting reading-writing data stored in a virtual storage volume, wherein the service application is connected to the virtual storage volume through at least two paths, the virtual storage volume is a logical storage volume created on distributed blocks, the paths are paths through which the service application is connected to the virtual storage volume via gateways. The process module 24 is configured to perform reading-writing on the data stored in the virtual storage volume through the at least two paths according to the read-write request.

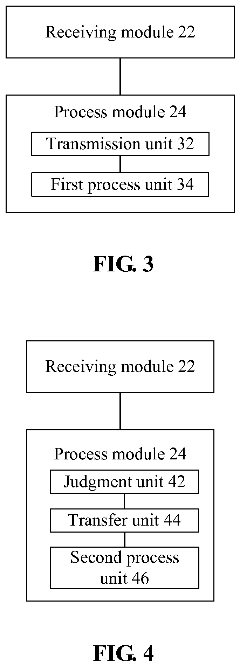

FIG. 3 is a first structural block diagram of the process module 24 in the data reading and writing device according to an embodiment of the present invention. As shown in FIG. 3, the process module 24 includes a transmission unit 32 and a first process unit 34. The process module 24 is described below.

The transmission unit 32 is configured to transmit, through the gateways on the at least two paths, a read-write instruction for reading-writing the data stored in the virtual storage volume to clients connected to the gateways. The first process unit 34 is connected to the above transmission unit 32 and is configured to perform reading-writing on the data stored in the virtual storage volume through the clients.

Optionally, the first process unit includes: when more than two clients simultaneously perform reading-writing on the data stored in the virtual storage volume, performing a concurrent mutual exclusion control on the more than two clients, wherein the concurrent mutual exclusion control allows only one client to perform reading-writing on the data stored in the virtual storage volume; and performing reading-writing on the data stored in the virtual storage volume according to a result of the concurrent mutual exclusion control.

In an alternative embodiment, the at least two paths comprise a first path and one or more second paths. FIG. 4 is a second structural block diagram of the process module 24 in the data reading and writing device according to an embodiment of the present invention. As shown in FIG. 4, the process module 24 includes a judgment unit 42, a transfer unit 44 and a second process unit 46. The process module 24 is described below.

The judgment unit 42 is configured to determine whether a first gateway on the first path used by the service application fails. The transfer unit 44 is connected to the judgment unit 42 and is configured to, if a determination result of the judgment unit 42 is yes, transfer all loads in the first gateway to a second gateway on one of the one or more second paths of the service application. The second process unit 46 is connected to the transfer unit 44 and is configured to perform reading-writing on the data stored in the virtual storage volume through the one of the one or more second paths.

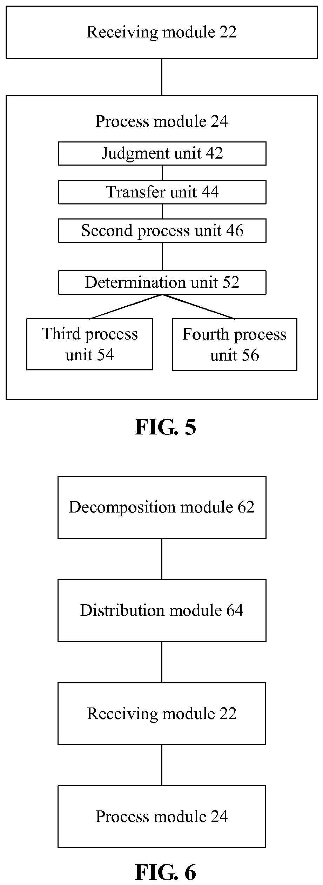

FIG. 5 is a preferred structural block diagram of the process module 24 in the data reading and writing device according to an embodiment of the present invention. As shown in FIG. 5, in addition to all the units in FIG. 4, the device further includes a determination unit 52 and a third process unit 54 or a fourth process unit 56. The process module 24 is described below.

The determination unit 52 is configured to determine that the first gateway returns to normal. The third process unit 54 is connected to the determination unit 52 and is configured to transfer a part of the all loads which has been transferred to the second gateway to the first gateway, and perform reading-writing on the data stored in the virtual storage volume with the first path and the one of the one or more second paths. Or, the fourth process unit 56 is connected to the determination unit 52 and is configured to transfer the all loads which have been transferred to the second gateway to the first gateway, and perform reading-writing on the data stored in the virtual storage volume with the first path.

FIG. 6 is a preferred structural block diagram of a data reading and writing device according to an embodiment of the present invention. As shown in FIG. 6, in addition to all the modules in FIG. 2, the device further includes a decomposition module 62 and a distribution module 64. The device is described below.

The decomposition module 62 is configured to decompose a storage space of the virtual storage volume into one or more storage sub-spaces. The distribution module 64 is connected to the decomposition module 62 and the receiving module 22, and is configured to distribute the one or more storage sub-spaces to one or more storage devices.

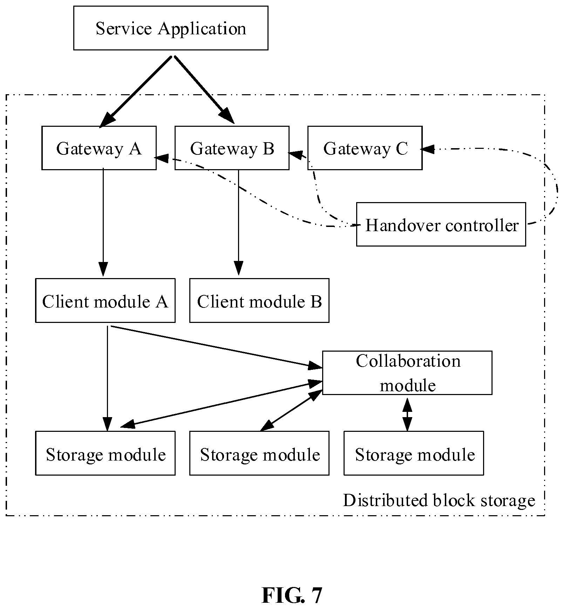

FIG. 7 is a system structure diagram of a distributed block storage and service application according to an embodiment of the present invention. As shown in the system structure diagram of FIG. 7, the block storage in embodiments of the present invention is a distributed architecture and is composed of a storage module (same as the aforementioned storage device), a collaboration module (same as the aforementioned decomposition module 62 and distribution module 64) and a client module (same as the aforementioned client). The system further includes a gateway, a handover controller (corresponding to the aforementioned judgment unit 42, the transfer unit 44, the second process unit 46, the determination unit 52, the third process unit 54 and the fourth process unit 56) and the service application.

The function of the storage module is to actually store the data with high reliability. The main function of the collaboration module is to manage distribution information of the data and manage information of the virtual storage volume. The main function of the client module is to externally provide block storage service capacity with the storage volume as a unit, and a same virtual storage volume may be simultaneously accessed through multiple client modules. The client module converts the SCSI block interface instruction transmitted by the gateway into data reading and writing operations inside the distributed block storage.

The function of the gateway is to convert the block device interface of the storage volume provided by the client into a standard iSCSI or FC protocol to be used by the service application. The function of the handover controller is to observe whether the gateway fails and to, when the gateway fails, transfer the loads and address of the failed gateway to other normal gateway. The function of the service application is the eventual unit using the block storage service. The virtual storage volume inside the distributed block storage is mapped to a local block device path for using through the interface of the client and the gateway.

In embodiments of the present invention, the storage volume is virtual and may externally provide services through multiple client modules and gateways simultaneously, and then, at the service application side, the block storage service provided by the same virtual storage volume through multiple gateways is remapped, using a multiple-path mechanism, to a storage volume for usage. A virtual storage volume is a logical storage volume created inside distributed block storage. Logically, the virtual storage volume is a section of contiguous storage space. In the implementation of distributed block storage, the logical storage space of the virtual storage volume is actually decomposed into several discrete storage spaces by the collaboration module, and the discrete storage spaces are distributed to each storage module for storage. The distribution rule of the virtual storage volumes are also planned and stored by the collaboration module.

For the modules above the client module (gateway and service application), a complete, contiguous storage volume is presented externally. The client module then decomposes the virtual storage volume into serval scattered data slices and distributedly stores them on storage modules according to the distribution rule of the virtual storage volume. An SCSI instruction sent by the gateway is converted by the client module, and then corresponds to reading/writing to a data slice. In the present invention, if a same data slice needs to be accessed at the same time by SCSI instructions received by multiple clients, the storage module will perform concurrent mutual exclusion control on the reading/writing to this data slice to avoid the loss of updating to the data slice, such that multiple client modules may access the same virtual storage volume at the same time, and the virtual storage volume is included in multi-path management based on this feature.

When a gateway fails, the handover controller detects the failure of the gateway in a limited period of time and forwards the previous loads carried by the failed gateway and the address of the failed gateway to other gateways. The beneficial effect is that redundancy in the number of paths during multipath connections are always maintained, and a case that the services are unavailable when the gateway or link fails is prevented from further happening.

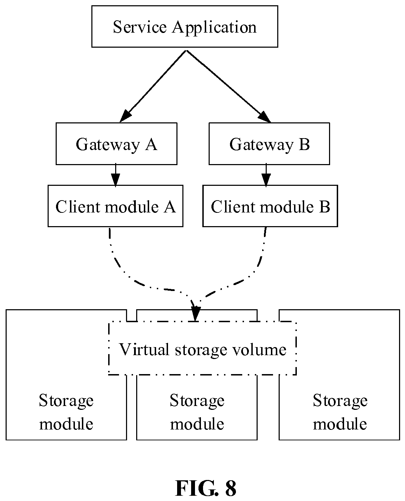

For high availability, the service application typically adopts a multi-path approach, that is, the service application is connected to the same storage volume through multiple links of multiple network adapters. When one of the multiple network adapters or a higher-level network switching equipment fails, the service application still can access the storage volume though another path. The multi-path in the related art is the multiple paths between the service application and the same gateway. In the embodiments of the present invention, the multi-path is the multiple paths between the service application and the same virtual storage volume, and the multiple paths pass through multiple groups of gateways and client modules. As shown in FIG. 8, FIG. 8 is a schematic diagram showing connections between a virtual storage volume and multi paths according to an embodiment of the present invention. The beneficial effect is that redundancy in the number of paths during multipath connections are always maintained, and a case that the services are unavailable when the gateway or link fails is prevented from further happening.

In order to further improve the overall high availability, as shown in FIG. 7, the present invention uses a handover controller to manage the gateway to provide services. When a gateway fails, the handover controller detects the failure of the gateway within a limited period of time and forwards the previous loads carried by the failed gateway together with the address of the failed gateway to other gateways. The beneficial effect is that redundancy in the number of paths during multipath connections are always maintained, and a case that the services are unavailable when the gateway or link fails is prevented from further happening.

In the embodiments of the present invention, steps of creating a virtual storage volume in distributed block storage and providing an encapsulated virtual storage volume to the service application are as follows.

In a first step, the virtual storage volume is created in the distributed block storage, and then the virtual storage volume is segmented into a plurality of data slices and the data slices are distributed in a plurality of storage modules.

In a second step, at each gateway node, the client modules of the distributed block storage are deployed. Since there is the concurrent mutual exclusion control on the reading/writing to the same data slice by storage modules, the client modules may access the same virtual storage volume and perform data reading and writing.

In a third step, the gateway converts the block storage interface provided by the client module into a standard block storage interface and provides it to the service application.

In a fourth step, the service application is connected to block storage interfaces of multiple gateways, and the block storage interfaces are mounted as local storage paths, such that multiple end-to-end I/O paths from the service application to the virtual storage volume are established.

In a fifth step, with the multi-path mechanism, the service application combines multiple storage paths into one storage path for usage. The multiple storage paths herein actually correspond to the same virtual storage volume.

In embodiments of the present invention, the steps of achieving the high availability of gateway services by multiple gateways using the handover controller are as follows.

In a first step, a gateway fails during the normal service, and the handover controller observes the failure of the gateway.

In a second step, the handover controller selects another gateway to carry the loads of the failed gateway.

In a third step, the failed gateway is activated after a period of time, and the handover controller observes the failed gateway is re-activated.

In a fourth step, the handover controller re-allocates loads, such that the failed gateway provides services again.

By adopting the method and device in embodiments of the present invention, the high availability of the block storage service can be strengthened, the single node failure of the gateway node itself can be overcome, the path redundancy of the service application during multi-path connection can be maintained, and the influence on services caused by further path failure can be avoided.

The present invention is described below in combination with specific application scenarios.

### VMWare (a commercial virtual machine software)/KVM (Kernel-based Virtual Machine) virtual desktop scenario.

In the virtual desktop scenario, by using the virtual desktop management system of VMWare or KVM software, the service application mounts the storage volume provided by the distributed block storage through the iSCSI or FC standard interface provided by the gateway. The virtual desktop management system is connected to multiple gateways in a multi-path manner, and the multiple gateways are mapped to the same virtual storage volume through client modules. Moreover, gateway nodes achieve higher availability by the handover controller. VMWare typically converts the storage volume into a storage pool in VMFS-format, and then creates a virtual machine image file in storage pool for using by the virtual desktop. KVM usually directly provides the storage volume as the block device to the virtual desktop for use. With the technique of the present invention, a higher availability will be obtained.

### Openstack (an open source cloud computing platform project) scenario

In Openstack, modules such as Nova (compute organization controller) and Cinder (storage organization controller) use storage volumes provided by distributed block storage as the storage backend. Nova and Cinder usually are connected to multiple gateways using the multi-path manner, and the multiple gateways are mapped to the same virtual storage volume through client modules. Moreover, gateway nodes achieve higher availability by the handover controller.

### Database scenario

In the database scenario, such as Oracle (a commercial database software) or MySQL (an open source database software) database, the storage volumes provided by distributed block storage may be used as the storage backend. The database may be connected to multiple gateways using the multi-path manner, and the multiple gateways are mapped to the same virtual storage volume through client modules. Moreover, gateway nodes achieve higher availability by the handover controller. The database may directly use the block interface of the storage volume or format the storage volume for use as a file system. With the solution in the embodiment of the present invention, a higher availability will be obtained.

### Data backup system

Data backup system is a disaster tolerance software which copies all or a part of data set to other storage media for preventing data loss caused by system failure or operation fault, and the distributed block storage may be used as the target media. The data backup system may be connected to multiple gateways using the multi-path manner, and the multiple gateways are mapped to the same virtual storage volume through client modules. Moreover, gateway nodes achieve higher availability by the handover controller.

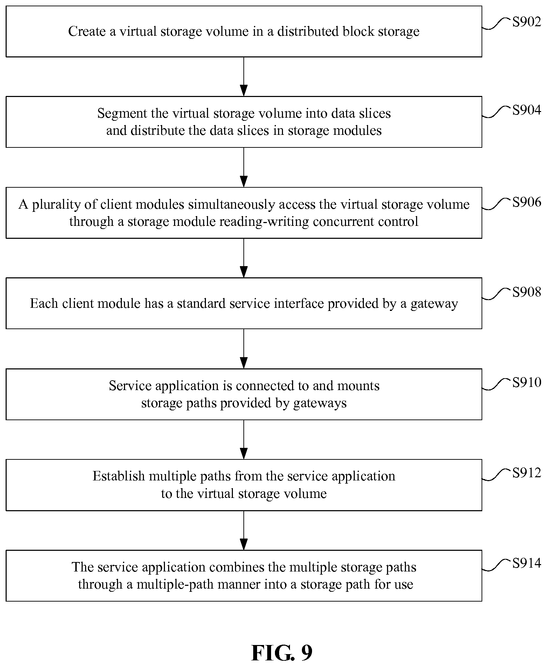

FIG. 9 is a flowchart of providing a distributed block storage for a service application after the distributed block storage is encapsulated according to an embodiment of the present invention. As shown in FIG. 9, the steps of creating the virtual storage volume in the distributed block storage, and then providing the encapsulated virtual storage volume to the service application are as follows.

In step S902, the virtual storage volume is created in the distributed block storage, which may be implemented in a command line manner or a graphical interface manner. During the creation of the virtual storage volume, at least the following features need to be specified, the name of the virtual storage volume, the maximum storage capacity, the number of copies, and data distribution rule and the like.

In step S904, the virtual storage volume is segmented into a plurality of data slices and the data slices are distributed in a plurality of storage modules.

In step S906, at each gateway node, the client modules of the distributed block storage are deployed. Since there is the concurrent mutual exclusion control on the reading/writing to the same data slice by storage modules, the client modules may access the same virtual storage volume and perform data reading and writing.

In step S908, the gateway converts the block storage interface provided by the client module into a standard iSCSI or FC block storage interface and provides it to the service application for use.

In step S910, the service application is connected to block storage interfaces of multiple gateways, and the block storage interfaces are mounted as local storage paths.

In step S912, multiple end-to-end I/O paths from the service application to the virtual storage volume are established.

In step S914, with the multi-path mechanism, the service application combines multiple storage paths into one storage path for usage. The multiple storage paths herein actually correspond to the same virtual storage volume.

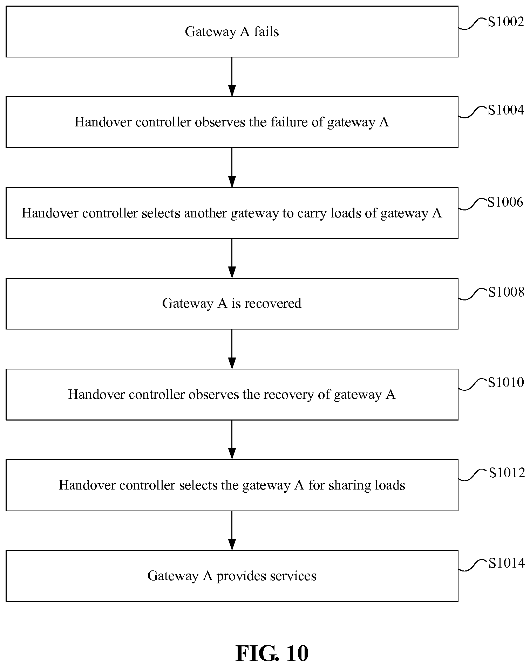

Based on the above architecture, multiple gateways achieve the high availability of gateway services by using the handover controller. As shown in FIG. 10, FIG. 10 is a flowchart of a handover controller in processing gateway failure and recovery according to an embodiment of the present invention. As shown in FIG. 10, this flowchart includes the following steps.

In step S1002, a gateway A fails in a normal service process.

In step S1004, the handover controller observes the failure of gateway A, and observes whether the gateway operates normally through a heartbeat mechanism and a state checking instruction of the gateway.

In step S1006, the handover controller selects another gateway (gateway B) to carry the loads which were carried by gateway A. The handover controller will change the configuration information of the gateway B, loading the configuration information of the previous gateway A to gateway B, and handovers the service address of the gateway A to the gateway B. There is a relatively fixed correspondence between the service address and the configuration information, which is multiple-to- multiple, one address may correspond to the configuration information of multiple virtual storage volumes, and multiple addresses may correspond to the configuration information of the same virtual storage volume.

In step S1008, the gateway A recovers after a period of time and can be activated. At this time, the gateway A has no service address, and does not carry any load.

In step S1010, the handover controller observes the recovery of gateway A.

In step S1012, the handover controller distributes the loads, and allocates a part of the loads on the gateway B to the gateway A. The handover controller transfers a part of the service addresses of the gateway B to the gateway A, and modifies the configuration information of the gateway A such that the configuration information corresponding to the service address is loaded to the gateway A.

In step S1014, the gateway A begins to provide services.

It should be noted that, each of the foregoing modules may be implemented by software or hardware, and the latter may be implemented by, but not limited to, locating the foregoing modules in a same processor; or locating the foregoing modules respectively in multiple processor.

An embodiment of the present invention further provides a storage medium. Alternatively, in the present embodiment, the above-mentioned storage medium may be configured to store program code for performing the following steps.

In step S1, a read-write request transmitted by a service application for requesting reading-writing data stored in a virtual storage volume is received. The service application is connected to the virtual storage volume through at least two paths, the virtual storage volume is a logical storage volume created on distributed blocks, and the paths are paths through which the service application is connected to the virtual storage volume via gateways.

In step S2, the data stored in the virtual storage volume is read/written according to the read-write request through the at least two paths.

Optionally, in this embodiment, the storage medium may include, but not limited to, various media capable of storing program codes such as a USB disk, a read-only memory (ROM), a random access memory (RAM), a removable hard disk, a magnetic disk or optical disk, etc.

Optionally, for specific examples in this embodiment, reference may be made to the examples described in the foregoing embodiments and optional embodiments, and details are not described herein again in this embodiment.

Through the above embodiments, end-to-end high availability of the block storage service and the service application can be achieved in a distributed block storage architecture. When one path between the service application and the gateway fails or a single gateway fails, the block storage service for the service application can automatically and quickly recover. Compared with the existing art, the technical solutions in the embodiments of the present invention overcome the problem that when a single gateway fails, the service may be interrupted. In addition, in the related art, when the single link fails, the remaining links will carry the loads of the failed link, as a result, not only the performance will decline, but also the service provision will be affected if the remaining links also fail. The solutions in the embodiments of the present invention also can well solve these problems. The problem of incomplete path redundancy and inability to tolerate further path failures when a single path fails in the multi-path technology of the related art is solved.

Apparently, those skilled in the art should understand that each module or each step of the present invention described above may be implemented by general-purpose -computing devices, which may be centralized on a single computing device or distributed on a network formed by multiple computing devices. Optionally, they may be implemented with program codes executable by a computing device, so that they may be stored in a storage device for execution by a computing device. Moreover, in some cases, the illustrated or described steps may be implemented in an order different from that herein. Alternatively, they may be made into various integrated circuit modules, or multiple modules or steps of them are made into a single integrated circuit module. As such, the present invention is not limited to any specific combination of hardware and software.

The foregoing descriptions are merely preferred embodiments of the present invention and are not intended to limit the present invention. For those skilled in the art, the present invention may have various modifications and changes. Any modification, equivalent replacement, improvement, etc. within the spirit and principle of the present invention should be included in the protection scope of the present invention.

### INDUSTRIAL APPLICABILITY

As described above, the data reading and writing method and device provided in embodiments of the present invention have the following beneficial effects. The problem in the related art that when a single gateway fails, data in a storage volume to which the gateway is connected cannot be read/written is solved, thereby achieving an effect that when the single gateway fails, data in the storage volume to which the gateway is connected can be read, and thus an uninterrupted service is ensured.

## Claims

1. A data reading and writing method, comprising:
receiving a read-write request transmitted by a service application for requesting reading-writing data stored in a virtual storage volume, wherein the service application is connected to the virtual storage volume through at least two paths, the virtual storage volume is a logical storage volume created on distributed blocks, the paths are paths through which the service application is connected to the virtual storage volume via gateways; and
performing reading-writing on the data stored in the virtual storage volume according to the read-write request through the at least two paths.

2. The method according to claim 1, wherein the performing reading-writing on the data stored in the virtual storage volume according to the read-write request through the at least two paths comprises:
transmitting, through the gateways on the at least two paths, a read-write instruction for reading-writing the data stored in the virtual storage volume to clients connected to the gateways; and
performing reading-writing on the data stored in the virtual storage volume through the clients.

3. The method according to claim 2, wherein the performing reading-writing on the data stored in the virtual storage volume through the clients comprises:
when more than two clients simultaneously perform reading-writing on the data stored in the virtual storage volume, performing a concurrent mutual exclusion control on the more than two clients, wherein the concurrent mutual exclusion control allows only one client to perform reading-writing on the data stored in the virtual storage volume; and
performing reading-writing on the data stored in the virtual storage volume according to a result of the concurrent mutual exclusion control.

4. The method according to claim 1, wherein the at least two paths comprise a first path and one or more second paths, and the performing reading-writing on the data stored in the virtual storage volume according to the read-write request through the at least two paths comprises:
determining whether a first gateway on the first path used by the service application is failed;
if a determination result is yes, transferring all loads in the first gateway to a second gateway on one of the one or more second paths of the service application; and
performing reading-writing on the data stored in the virtual storage volume through the one of the one or more second paths.

5. The method according to claim 4, wherein after the performing reading-writing on the data stored in the virtual storage volume through the one of the one or more second paths, the method further comprises:
determining that the first gateway returns to normal;
transferring a part of the all loads which has been transferred to the second gateway to the first gateway, and performing reading-writing on the data stored in the virtual storage volume with the first path and the one of the one or more second paths; or
transferring the all loads which have been transferred to the second gateway to the first gateway, and performing reading-writing on the data stored in the virtual storage volume with the first path.

6. The method according to claim 1, wherein before the receiving a read-write request transmitted by a service application for requesting reading-writing data stored in a virtual storage volume, the method further comprises:
decomposing a storage space of the virtual storage volume into one or more storage sub-spaces; and
distributing the one or more storage sub-spaces to one or more storage devices.

7. A data reading and writing device, comprising:
a receiving module, configured to receive a read-write request transmitted by a service application for requesting reading-writing data stored in a virtual storage volume, wherein the service application is connected to the virtual storage volume through at least two paths, the virtual storage volume is a logical storage volume created on distributed blocks, the paths are paths through which the service application is connected to the virtual storage volume via gateways; and
a process module, configured to perform reading-writing on the data stored in the virtual storage volume according to the read-write request through the at least two paths.

8. The device according to claim 7, wherein the process module comprises:
a transmission unit, configured to transmit, through the gateways on the at least two paths, a read-write instruction for reading-writing the data stored in the virtual storage volume to clients connected to the gateways; and
a first process unit, configured to perform reading-writing on the data stored in the virtual storage volume through the clients.

9. The device according to claim 8, wherein the first process unit comprises:
when more than two clients simultaneously perform reading-writing on the data stored in the virtual storage volume, performing a concurrent mutual exclusion control on the more than two clients, wherein the concurrent mutual exclusion control allows only one client to perform reading-writing on the data stored in the virtual storage volume; and
performing reading-writing on the data stored in the virtual storage volume according to a result of the concurrent mutual exclusion control.

10. The device according to claim 7, wherein the at least two paths comprise a first path and one or more second paths, and the process module comprises:
a judgment unit, configured to determine whether a first gateway on the first path used by the service application is failed;
a transfer unit, configured to, if a determination result is yes, transfer all loads in the first gateway to a second gateway on one of the one or more second paths of the service application; and
a second process unit, configured to perform reading-writing on the data stored in the virtual storage volume through the one of the one or more second paths.

11. The device according to claim 10, further comprises:
a determination unit, configured to determine that the first gateway returns to normal;
a third process unit, configured to transfer a part of the all loads which has been transferred to the second gateway to the first gateway, and perform reading-writing on the data stored in the virtual storage volume with the first path and the one of the one or more second paths; or
a fourth process unit, configured to transfer the all loads which have been transferred to the second gateway to the first gateway, and perform reading-writing on the data stored in the virtual storage volume with the first path.

12. The device according to claim 7, further comprises:
a decomposition module, configured to decompose a storage space of the virtual storage volume into one or more storage sub-spaces; and
a distribution module, configured to distribute the one or more storage sub-spaces to one or more storage devices.
